(19) Europäisches Patentamt
European Patent Office
Office européen des brevets

(11) **EP 2 473 384 B1**

(12) **EUROPÄISCHE PATENTSCHRIFT**

(45) Veröffentlichungstag und Bekanntmachung des Hinweises auf die Patenterteilung:
**25.05.2016  Patentblatt 2016/21**

(21) Anmeldenummer: **10743138.9**

(22) Anmeldetag: **17.08.2010**

(51) Int Cl.:
***B60T 8/172*** *(2006.01)*

(86) Internationale Anmeldenummer:
**PCT/EP2010/061942**

(87) Internationale Veröffentlichungsnummer:
**WO 2011/023591 (03.03.2011 Gazette 2011/09)**

(54) **VERFAHREN ZUR BESTIMMUNG DER FAHRZEUGLÄNGSGESCHWINDIGKEIT IN EINEM FAHRZEUG**

METHOD FOR DETERMINING THE VEHICLE LONGITUDINAL SPEED IN A VEHICLE

PROCÉDÉ DE DÉTERMINATION DE LA VITESSE LONGITUDINALE DU VÉHICULE DANS UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **31.08.2009  DE 102009029018**

(43) Veröffentlichungstag der Anmeldung:
**11.07.2012  Patentblatt 2012/28**

(73) Patentinhaber: **Robert Bosch GmbH 70442 Stuttgart (DE)**

(72) Erfinder:
• KROEGER, Patrick
  74072 Heilbronn (DE)
• ANTONOV, Sergiy
  74072 Heilbronn (DE)

(56) Entgegenhaltungen:
WO-A1-2007/048947     FR-A1- 2 871 889
US-A- 6 015 192       US-A1- 2003 163 226

**Beschreibung**

Die Erfindung bezieht sich auf ein Verfahren zur Bestimmung der Fahrzeuglängsgeschwindigkeit in einem Fahrzeug nach dem Oberbegriff des Anspruches 1.

Stand der Technik

In der DE 102 59 272 A1 wird ein Verfahren zur Bestimmung einer Fahrzeugreferenzgeschwindigkeit beschrieben, bei dem auf der Grundlage sensorisch ermittelter Beschleunigungswerte verschiedene Berechnungswege eingeschlagen werden, um vorläufige Einzelwerte für die Fahrzeuggeschwindigkeit zu erhalten. Die Einzelwerte für die Fahrzeuggeschwindigkeit werden gewichtet, wobei die gesuchte Fahrzeugreferenzgeschwindigkeit als Mittelwert der gewichteten Einzelgeschwindigkeiten gebildet wird.

Aus der DE 199 36 710 A1 ist es bekannt, auf der Grundlage einer Sensorik eines elektronischen Stabilitätsprogramms (ESP), die einen Querbeschleunigungssensor, einen Gierratensensor und vier Raddrehzahlfühlerumfasst, Gewichtungsgrößen für die einzelnen Radgeschwindigkeitswerte zu ermitteln und in Abhängigkeit der gewichteten Radgeschwindigkeitswerte einen Mittelwert zu bilden, der eine Stützgröße darstellt. Die gesuchte Fahrzeuggeschwindigkeit wird als Funktion der Stützgröße berechnet.

Sowohl bei der DE 102 59 272 A1 als auch bei der DE 199 36 710 A1 wird die zu ermittelnde Geschwindigkeitsgröße auf der Grundlage der frei rollenden Radgeschwindigkeiten berechnet, welche aus mathematischen Modellen gewonnen werden, die jedoch nur eine beschränkte Gültigkeit besitzen. Bei komplexeren Modellen, mit denen die Fahrzeuggeschwindigkeit mit höherer Güte ermittelt werden kann, wird üblicherweise ein nichtlineares Modell bzw. ein nichtlinearer Algorithmus eingesetzt, der aber nur mit einem erhöhten Rechenaufwand ausgewertet werden kann.

Aus der US 6 015 192 ist ein Verfahren zur Bestimmung der Fahrzeuglängsgeschwindigkeit in einem Fahrzeug unter Zugrundelegung sensorisch ermittelter Raddrehzahlen bekannt. In einem ersten Schritt werden aus Sensordaten eines Radgeschwindigkeitssensors die Raddrehzahlen $\omega$ ermittelt, welche in eine Differentialgleichung einfließen, aus der Längskräfte ermittelt werden. Die Längskräfte werden einer Filterung unterzogen, wobei die gefilterten Werte zur Ermittlung radindividueller Längskräfte herangezogen werden. Die Fahrzeuglängsgeschwindigkeit wird in einer Summenformel unter Berücksichtigung der radindividuellen Längskräfte und den sensierten Radgeschwindigkeiten berechnet.

Offenbarung der Erfindung

Der Erfindung liegt die Aufgabe zu Grunde, die Fahrzeuglängsgeschwindigkeit in einem Fahrzeug mit hoher Güte und reduziertem Rechenaufwand zu bestimmen.

Diese Aufgabe wird erfindungsgemäß mit den Merkmalen des Anspruches 1 gelöst. Die Unteransprüche geben zweckmäßige Weiterbildungen an.

Mit dem erfindungsgemäßen Verfahren kann die Fahrzeuglängsgeschwindigkeit in einem Fahrzeug bestimmt werden, und zwar vorzugsweise allein auf der Grundlage einer ESP-Sensorik (elektronisches Stabilitätsprogramm), die pro Fahrzeugrad einen Drehzahlfühler, eine Gierratensensor und einen Querbeschleunigungssensor umfasst. Das Verfahren benötigt nur einen verhältnismäßig geringen Rechenaufwand und erlaubt trotzdem die Ermittlung der Fahrzeuglängsgeschwindigkeit mit verhältnismäßig hoher Güte.

Grundlage des Verfahrens ist die Bestimmung radindividueller Radlängskräfte in einer Schätzgleichung in Abhängigkeit der Raddrehzahlen und daran anschließend die Ermittlung der Fahrzeuglängsgeschwindigkeit als Funktion der jeweiligen Radlängskraft. Die Radlängskraft hängt von verschiedenen Größen ab, insbesondere vom Fahrbahnreibwert, einem Längsschlupfreibwert, der durch den Längsschlupf am Reifen bedingt ist, und der Radaufstandskraft. Die Radaufstandskraft ist an sich bekannt, sie liegt entweder als stationärer Wert vor, welcher sich aus der Fahrzeugmasse berechnet, oder wird aus Schätzgleichungen bestimmt, die in einem Regel- bzw. Steuergerät im Fahrzeug hinterlegt sind. Der Längsschlupfreibwert wird als Funktion der Raddrehzahl und der Fahrzeuglängsgeschwindigkeit ermittelt, der Fahrbahnreibwert, der üblicherweise messtechnisch nicht erfasst wird, wird aus einem Differenzialgleichungssystem in Abhängigkeit von Radmomenten und -kräften berechnet. Des Weiteren werden zweckmäßigerweise die Raddrehzahlen zusätzlich zur Messung auch rechnerisch bestimmt, wobei die Differenz zwischen gemessener und geschätzter Größe in einem Beobachtergleichungssystem verwertet wird. Die antreibenden und bremsenden Momente am Rad können ebenfalls rechnerisch ermittelt oder aus gemessenen Größen, beispielsweise dem Motorantriebsmoment oder dem Bremsdruck im Bremskreis bestimmt werden.

Die die Raddynamik beschreibenden Gleichungen werden zweckmäßigerweise einem Beobachtungssystem zu Grunde gelegt, insbesondere einem nichtlinearen Luenberger-Beobachter, wobei die Beobachtergleichung im Beobachterteil einen Verstärkungsvektor mit skalaren Verstärkungsfaktoren umfasst, die entweder als konstante Größen vorgegeben oder in Abhängigkeit von Zustandsgrößen des Fahrzeugs ermittelt werden. In bevorzugter Ausführung hängt zumindest einer der Verstärkungsfaktoren von der relativen Radgeschwindigkeit ab, die als Differenz von berechneter Raddrehzahl multipliziert mit dem Radradius und berechneter Fahrzeuggeschwindigkeit ermittelt wird. Beispielsweise wird ein erster Verstärkungsfaktor auf einen zumindest annähernd konstanten, positiven Wert gesetzt, wohingegen der zweite Verstärkungsfaktor im Verstärkungsvektor bei gebremstem Rad und bei angetriebenem Rad auf unterschiedliche Werte gesetzt wird. Bei gebremstem Rad nimmt der zweite Verstärkungsfaktor zweckmäßigerweise einen annähernd konstanten, positiven Wert ein, bei angetriebenem Rad einen zumindest annähernd konstanten, negativen Wert. Im Übergang zwischen positivem zu negativem Wert verläuft der Verstärkungsfaktor zumindest annähernd linear in Abhängigkeit der relativen Radgeschwindigkeit.

Diese Gleichungen beschreiben in hinreichender Weise die Raddynamik. Aus den Gleichungen der Raddynamik kann die Radlängskraft bestimmt werden, die der Berechnung der Fahrzeuglängsgeschwindigkeit zu Grunde liegt. Hierbei wird zweckmäßigerweise eine Differenzialgleichung für die Fahrzeuglängsgeschwindigkeit aufgestellt, die von der Summe der einzelnen Radlängskräfte pro Fahrzeugrad, dividiert durch die Fahrzeugmasse abhängt.

Insgesamt erhält man auf diese Weise ein differenzial-algebraisches Gleichungssystem, das einen Beobachter umfasst, wobei sich das Gleichungssystem mit hoher Genauigkeit und verhältnismäßig geringer Rechenzeit lösen lässt. Dementsprechend kann bei einer Implementierung in einem Regel- bzw. Steuergerät im Fahrzeug die Fahrzeuglängsgeschwindigkeit schnell und mit hoher Güte ermittelt werden, und zwar grundsätzlich allein auf der Grundlage der ESP-Sensorik. Das Regel- bzw. Steuergerät, in welchem das Verfahren abläuft, ist zweckmäßigerweise Bestandteil eines Fahrerassistenzsystems, bspw. eines elektronischen Stabilitätsprogramms oder eines Antiblockiersystems, oder einem derartigen Fahrerassistenzsystem zugeordnet.

Weitere Vorteile und zweckmäßige Ausführungen sind den weiteren Ansprüchen, der Figurenbeschreibung und den Zeichnungen zu entnehmen. Es zeigen:

Fig. 1    ein Schaubild mit einer vereinfachten Darstellung des Längsschlupfreibwerts in Abhängigkeit vom Radlängsschlupf,

Fig. 2    ein Schaubild mit einem ersten Verstärkungsfaktor, der in einem Beobachter eingesetzt wird, in Abhängigkeit der relativen Radgeschwindigkeit,

Fig. 3    ein Schaubild mit einem zweiten Verstärkungsfaktor, der Bestandteil des Beobachters ist, ebenfalls in Abhängigkeit der relativen Radgeschwindigkeit,

Fig. 4    ein Blockschaltbild des Schätzers der Fahrzeuglängsgeschwindigkeit.

Dem nachfolgenden Ausführungsbeispiel liegt ein Fahrzeug mit vier Raddrehzahlfühlem zugrunde, beispielsweise aus einer Standard-ESP-Sensorik, die außerdem einen Gierratensensor sowie einen Querbeschleunigungssensor aufweist, so dass die Raddrehzahlen an jedem Fahrzeugrad, die Gierrate und die Querbeschleunigung im Fahrzeug sensorisch bestimmt werden können. Voraussetzung für die Durchführung des Verfahrens sind die Informationen der Raddrehzahlfühler, wobei die Informationen des Gierratensensors sowie des Querbeschleunigungssensors optional verwendet werden können, um die Genauigkeit zu verbessern. Darüber hinaus sollen auch die Antriebs- und Bremsmomente einzelner Räder als Schätzwerte zur Verfügung stehen, wobei ggf. in den Bremssystemen des Fahrzeugs die Bremsdrücke in den Radbremszylindem individuell gemessen werden können, wodurch die Schätzung der Radmomente verbessert wird.

Zunächst werden die die Raddynamik beschreibenden Zusammenhänge erläutert:

Die in der Kontaktfläche zwischen dem Reifen und der Fahrbahn effektiv ausgenutzte Längskraft $F_{w,x}$ hängt von verschiedenen Faktoren ab. Für die Schätzung der Längsgeschwindigkeit $v_x$ kann diese näherungsweise durch

$$F_{w,x} = \max\{\mu_{road}, \mu_w\{\kappa\}\} \cdot F_{w,z}$$

dargestellt werden. Hierbei sind $\mu_{road}$ der durch die Fahrbahn bedingte Reibwert, $\mu_w\{\kappa\}$ der durch den Längsschlupf bedingte Reibwert und $F_{w,z}$ die Aufstandskraft des Rades.

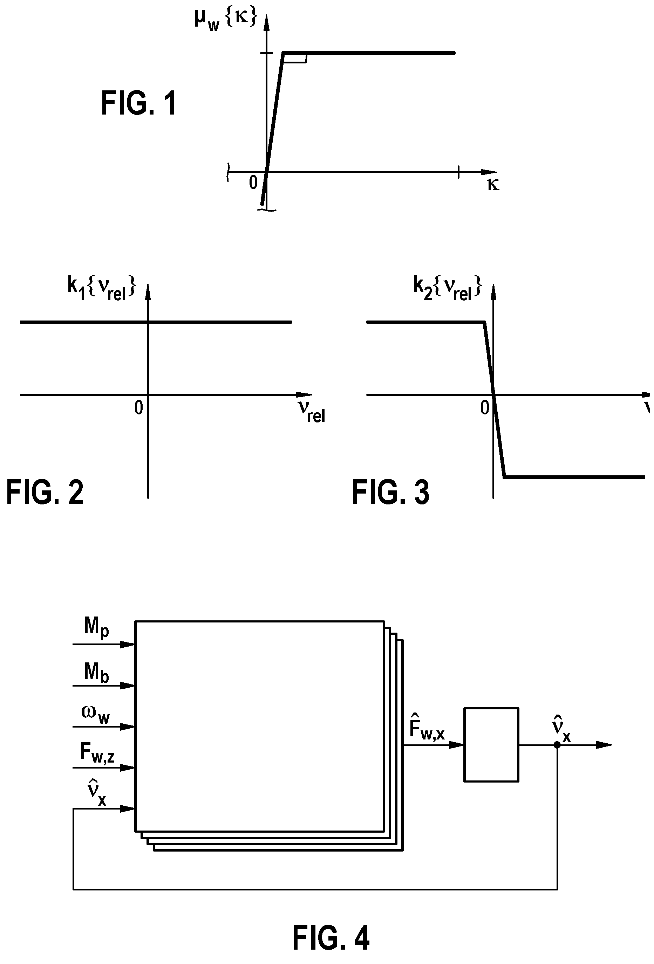

Wie Fig. 1 zu entnehmen, steigt der Längsschlupfreibwert $\mu_w$ zunächst linear und mit großer Steigung mit dem Radlängsschlupf ($\kappa$) an und verharrt mit dem Erreichen eines Grenzwerts auf einem zumindest annähernd konstanten Wert.

Der Längsschlupf ($\kappa$) ist durch

$$\kappa = \begin{cases} \dfrac{\omega_w\, r_w - v_x}{\omega_w\, r_w} & \text{für} \quad \omega_w\, r_w > v_x \quad \text{(Antreiben)} \\[2ex] \dfrac{\omega_w\, r_w - v_x}{v_x} & \text{für} \quad \omega_w\, r_w < v_x \quad \text{(Bremsen)} \end{cases}$$

gegeben, wobei $\omega_w$ die Raddrehzahl und $r_w$ den Radradius bezeichnet. Somit lässt sich die Radbewegung in Abhängigkeit das Radträgheitsmoments $J_w$, des Radantriebsmoments $M_p$, des Radbremsmoments $M_b$ und der Radlängskraft $F_{w,x}$ mit der folgenden Differentialgleichung beschreiben:

$$\dot{\omega}_w = \frac{1}{J_w}\left(M_p - M_b - F_{w,x}\, r_w\right).$$

Die oben beschriebenen Gleichungen bilden die Grundlage für die Beschreibung der Raddynamik, jedoch vervollständigt durch die Betrachtung des Fahrbahnreibwertes $\mu_{road}$, der die Griffigkeit der aktuell gegebenen Fahrbahn widerspiegelt. Diese Größe kann in Serienfahrzeugen nicht messtechnisch erfasst werden, sie hat jedoch einen großen Einfluss auf die Rad- und folglich auch auf die Fahrzeugdynamik. Aus diesen Gründen wird das unbekannte Verhalten des Reibwertes $\mu_{road}$ mit einer von der Systemanregung abhängigen Dynamik gemäß folgender Differentialgleichung modelliert:

$$\dot{\mu}_{road} = \mu_{road}\, g\{M_p, M_b, F_{w,z}\},$$

wobei $g\{M_p, M_b, F_{w,z}\}$ eine normierte algebraische Funktion bezeichnet, die die Radmomente und -kräfte beinhaltet.
Als Ausgang $y$ des Modells dient die Raddrehzahl $\omega_w$:

$$y = \omega_w.$$

Die mathematische Systembeschreibung wird für die weiteren Betrachtungen in funktionaler Form eingeführt:

$$\dot{\hat{x}} = f\{\hat{x}, u\},$$

$$\hat{y} = h\{\hat{x}\},$$

mit

$$\hat{x} = [\hat{\omega}_w\ \hat{\mu}_{road}]^T, \quad u = [M_p\ M_b\ F_{w,z}\ v_x]^T, \quad \hat{y} = \hat{\omega}_w.$$

Für dieses System lässt sich ein nichtlinearer Luenberger-Beobachter wie folgt aufstellen:

$$\dot{\hat{x}} = f\{\hat{x}, u\} - k\{\hat{x}, u\}(\hat{y} - y),$$

$$\hat{y} = h\{\hat{x}\}.$$

Hierin bezeichnet $k\{\hat{x}, u\}$ einen Verstärkungsvektor des Beobachters, der die beiden Verstärkungsfaktoren $k_1$,

$k_2$ aufweist:

$$\mathbf{k}\{\hat{\mathbf{x}}, \mathbf{u}\} = \begin{bmatrix} k_1 & k_2 \end{bmatrix}^T \, ,$$

wobei die Verstärkungsfaktoren $k_1$, $k_2$ als Funktion der relativen Radgeschwindigkeit $\hat{v}_{rel}$ gemäß

$$k_1 = k_1\{\hat{v}_{\mathrm{rel}}\}$$

$$k_2 = k_2\{\hat{v}_{\mathrm{rel}}\}$$

ermittelt werden.

Die relative Radgeschwindigkeit $\hat{v}_{rel}$ wird als Funktion der berechneten Raddrehzahl $\hat{\omega}_w$, des Radradius $r_w$ und der berechneten Fahrzeuglängsgeschwindigkeit $\hat{v}_x$ gemäß

$$\hat{v}_{\mathrm{rel}} = \hat{\omega}_{\mathrm{w}} r_{\mathrm{w}} - \hat{v}_x$$

bestimmt.

Der erste Verstärkungsfaktor $k_1$ wird, wie Fig. 2 zu entnehmen, auf einen zumindest annähernd konstanten, positiven Wert gesetzt wird, wobei gegebenenfalls auch eine lineare oder nichtlineare Abhängigkeit von der relativen Radgeschwindigkeit $\hat{v}_{rel}$ in Betracht kommt.

Der Verlauf des zweiten Verstärkungsfaktors $k_2$ ist in Fig. 3 dargestellt. Der zweite Verstärkungsfaktors $k_2$ wird bei gebremstem Rad (linke Schaubüdhälfte) auf einen zumindest annähernd konstanten, positiven Wert und bei angetriebenem Rad (rechte Schaubildhälfte) auf einen zumindest annähernd konstanten, negativen Wert gesetzt wird, wobei im Übergang von positivem zu negativem Wert der zweite Verstärkungsfaktor $k_2$ zumindest annähernd linear, jedoch mit großer Steigung, von der relativen Radgeschwindigkeit $\hat{v}_{rel}$ abhängt.

Alternativ kann die Abhängigkeit der Verstärkungsfaktoren auf eine andere, mit der Relativgeschwindigkeit $\hat{v}_{rel}$ verwandte Größe, zum Beispiel auf den Längsschlupf $\kappa$, bezogen werden.

Mit Hilfe des vorgestellten Modells sowie des Schätzerkonzeptes lassen sich die Raddynamik und der unbekannte Fahrbahnreibwert ermitteln. Somit kann jederzeit die aktuell abgesetzte Reifenkraft $\hat{F}_{w,x}$ in Längsrichtung berechnet werden. Grundsätzlich können auch andere Methoden zur Berechnung des Verstär kungsvektors $\mathbf{k}$ eingesetzt werden. Es konnten vergleichbare Ergebnisse mit einem Unscented Kalman Filter (UKF) und mit einem linearen Kalman Filter (KF) erzielt werden. Allerdings benötigt der oben dargestellte Luenberger-Beobachter bedeutend weniger Berechnungszeit sowie weniger Speicherressourcen.

Die geschätzten Reifenkräfte $\hat{F}_{w,x}$ aller Räder werden zur Ermittlung der Längsgeschwindigkeit $\hat{v}_x$ des Fahrzeuges gemäß der Bewegungsgleichung

$$\hat{v}_x = \frac{1}{m} \sum \hat{F}_{w,x}$$

herangezogen. Wird diese Bewegungsgleichung mit den die Raddynamik beschreibenden Gleichungen kombiniert, so entsteht der vollständige Ablauf zur Schätzung der Längsgeschwindigkeit, siehe Fig. 4. Dieses Konzept kann bei Vorderradantrieb, Hinterradantrieb und Allradantrieb eingesetzt werden.

Wie Fig. 4 zu entnehmen, fließen in den Berechnungsblock als Eingangsgrößen das Antriebsmoment $M_p$, das Bremsmoment $M_b$, die Raddrehzahl $\omega_w$ sowie die Radaufstandskraft $F_{w,z}$ für jedes Rad ein. Darüber hinaus wird ein vorab ermittelter Wert für die Fahrzeuglängsgeschwindigkeit $\hat{v}_x$ dem Berechnungsblock zugeführt.

Im Berechnungsblock erfolgt die Berechnung der Raddynamik gemäß den oben beschriebenen Radgleichungen, die für jedes Fahrzeugrad durchgeführt werden. Am Ausgang des Berechnungsblocks steht die berechnete Radlängskraft $F_{w,x}$ für jedes Fahrzeugrad zur Verfügung, die in einem weiteren Berechnungsblock zur Ermittlung der Fahrzeuglängsgeschwindigkeit $\hat{v}_x$ dient. Da es sich um einen rekursiven Algorithmus handelt, wird die ausgangsseitige

Fahrzeuglängsgeschwindigkeit $\overset{\wedge}{v}_x$ dem ersten Berechnungsblock als Eingangsgröße zugeführt.

**Patentansprüche**

1. Verfahren zur Bestimmung der Fahrzeuglängsgeschwindigkeit in einem Fahrzeug, bei dem der Berechnung der Fahrzeuglängsgeschwindigkeit ($v_x$) sensorisch ermittelte Raddrehzahlen ($\omega_w$) zugrunde gelegt werden, wobei in einer Schätzgleichung eine Radlängskraft ($F_{w,x}$) in Abhängigkeit der Raddrehzahl ($\omega_w$) bestimmt und die Fahrzeuglängsgeschwindigkeit ($v_x$) als Funktion der Radlängskraft ($F_{w,x}$) ermittelt wird, **dadurch gekennzeichnet, dass** die Radlängskraft ($F_{w,x}$) in Abhängigkeit der Radaufstandskraft ($F_{w,z}$), des Fahrbahnreibwerts ($\mu_{road}$) und eines vom Radlängsschlupf ($\kappa$) abhängigen Längsschlupfreibwerts ($\mu_w$) ermittelt wird:

$$F_{w,x} = \max\{\mu_{road}, \mu_w\{\kappa\}\} \cdot F_{w,z} \ ,$$

und dass die berechnete Fahrzeuglängsgeschwindigkeit ($\overset{\wedge}{v}_x$) als Funktion der berechneten Radlängskräfte ($\overset{\wedge}{F}w_{,x}$) an den Fahrzeugrädern aus der Bewegungsgleichung

$$\overset{\wedge}{\dot{v}}_x = \frac{1}{m} \sum \hat{F}_{w,x}$$

ermittelt wird, wobei

m die Fahrzeugmasse

bezeichnet.

2. Verfahren nach Anspruch 1, **dadurch gekennzeichnet, dass** der Radlängsschlupf ($K$) von den Raddrehzahlen ($\omega_w$), dem Reifenradius ($r_\omega$) und der Fahrzeuglängsgeschwindigkeit ($v_x$) abhängt:

$$\kappa = \begin{cases} \dfrac{\omega_w \, r_w - v_x}{\omega_w \, r_w} & \text{für} \quad \omega_w \, r_w > v_x \quad \text{(Antreiben)} \\[2ex] \dfrac{\omega_w \, r_w - v_x}{v_x} & \text{für} \quad \omega_w \, r_w < v_x \quad \text{(Bremsen)} \end{cases}$$

3. Verfahren nach Anspruch 1 oder 2, **dadurch gekennzeichnet, dass** der Längsschlupfreibwert ($\mu_w$) linear mit dem Radlängsschlupf ($\kappa$) ansteigt und mit dem Erreichen eines Grenzwerts auf einem konstanten Wert bleibt.

4. Verfahren nach einem der Ansprüche 1 bis 3, **dadurch gekennzeichnet, dass** die Raddrehbewegung in Abhängigkeit das Radträgheitsmoments ($J_w$), des Radantriebsmoments ($M_p$), des Radbremsmoments ($M_b$) und der Radlängskraft ($F_{w,x}$) über die Differentialgleichung

$$\dot{\omega}_w = \frac{1}{J_w}\left(M_p - M_b - F_{w,x} \, r_w\right)$$

beschrieben wird.

5. Verfahren nach einem der Ansprüche 1 bis 4, **dadurch gekennzeichnet, dass** der Fahrbahnreibwert ($\mu_{road}$) in Abhängigkeit des Radantriebsmoments ($M_p$), des Radbremsmoments ($M_b$) und der Radaufstandskraft ($F_{w,z}$) über die Differentialgleichung

$$\dot{\mu}_{road} = \mu_{road} \, g\{M_p, M_b, F_{w,z}\}$$

beschrieben wird.

6. Verfahren nach einem der Ansprüche 1 bis 5, **dadurch gekennzeichnet, dass** für die die Raddynamik beschreibenden Gleichungen

$$\dot{\hat{\mathbf{x}}} = \mathbf{f}\{\hat{\mathbf{x}}, \mathbf{u}\}$$

$$\hat{y} = h\{\hat{\mathbf{x}}\}$$

mit

$$\hat{\mathbf{x}} = [\hat{\omega}_w \ \hat{\mu}_{road}]^T$$

$$\mathbf{u} = [M_p \ M_b \ F_{w,z} \ v_x]^T$$

$$\hat{y} = \hat{\omega}_w$$

ein Beobachter-Gleichungssystem der Form

$$\dot{\hat{\mathbf{x}}} = \mathbf{f}\{\hat{\mathbf{x}}, \mathbf{u}\} - \mathbf{k}\{\hat{\mathbf{x}}, \mathbf{u}\}(\hat{y} - y)$$

$$\hat{y} = h\{\hat{\mathbf{x}}\}$$

aufgestellt wird, wobei der Verstärkungsvektor ($\mathbf{k}\{\hat{\mathbf{x}},\mathbf{u}\}$) zwei konstante oder zustandsgrößenabhängige Verstärkungsfaktoren ($k_1$, $k_2$) enthält.

7. Verfahren nach Anspruch 6, **dadurch gekennzeichnet, dass** mindestens ein Verstärkungsfaktor ($k_1$, $k_2$) des Verstärkungsvektors ($\mathbf{k}\{\hat{\mathbf{x}},\mathbf{u}\}$)

$$\mathbf{k}\{\hat{\mathbf{x}}, \mathbf{u}\} = [k_1 \quad k_2]^T$$

als Funktion der relativen Radgeschwindigkeit ($\hat{v}_{rel}$) oder einer damit korrelierenden Größe gemäß

$$k_1 = k_1\{\hat{v}_{rel}\}$$

$$k_2 = k_2\{\hat{v}_{rel}\}$$

bestimmt wird, wobei die relative Radgeschwindigkeit ($\hat{v}_{rel}$) als Funktion der berechneten Raddrehzahl ($\hat{\omega}_w$), des Radradius ($r_w$) und der berechneten Fahrzeuglängsgeschwindigkeit ($\hat{v}_x$) gemäß

$$\hat{v}_{\text{rel}} = \hat{\omega}_{\text{w}} r_{\text{w}} - \hat{v}_x$$

bestimmt wird.

**8.** Verfahren nach Anspruch 6 oder 7, **dadurch gekennzeichnet, dass** der erste Verstärkungsfaktor ($k_1$) des Verstärkungsvektors ($\mathbf{k}\{\hat{\mathbf{x}},\mathbf{u}\}$) auf einen zumindest annähernd konstanten, positiven Wert gesetzt wird.

**9.** Verfahren nach einem der Ansprüche 6 bis 8, **dadurch gekennzeichnet, dass** der zweite Verstärkungsfaktor ($k_2$) des Verstärkungsvektors ($\mathbf{k}\{\hat{\mathbf{x}},\mathbf{u}\}$) bei gebremstem Rad auf einen zumindest annähernd konstanten, positiven Wert und bei angetriebenem Rad auf einen zumindest annähernd konstanten, negativen Wert gesetzt wird, wobei im Übergang von positivem zu negativem Wert der zweite Verstärkungsfaktor ($k_2$) zumindest annähernd linear von der relativen Radgeschwindigkeit ($\hat{v}_{\text{rel}}$) abhängt.

**10.** Regel- bzw. Steuergerät zur Durchführung des Verfahrens nach einem der Ansprüche 1 bis 9.

**11.** Fahrerassistenzsystem in einem Fahrzeug mit einem Regel- bzw. Steuergerät nach Anspruch 10.

**12.** Elektronisches Stabilitätsprogramm (ESP) mit einem Regel- bzw. Steuergerät nach Anspruch 10 und einer Sensorik, die einen Gierratensensor, einen Querbeschleunigungssensor und pro Rad einen Raddrehzahlfühler umfasst.

**Claims**

**1.** Method for determining the vehicle longitudinal speed in a vehicle, in which the calculation of the vehicle longitudinal speed ($v_x$) is based on wheel speeds ($\omega_w$) which are determined by sensors, wherein a wheel longitudinal force ($F_{w,x}$) is determined in an estimated equation as a function of the wheel speed ($\omega_w$) and the vehicle longitudinal speed ($v_x$) is determined as a function of the wheel longitudinal force ($F_{w,x}$), **characterized in that** the wheel longitudinal force ($F_{w,x}$) is determined as a function of the wheel contact force ($F_{w,x}$), and coefficient of friction ($\mu_{\text{road}}$) of the underlying surface and a longitudinal slip coefficient of friction ($\mu_w$) which is dependent on the wheel longitudinal slip (k):

$$F_{w,x} = \max\{\mu_{\text{road}}, \mu_w\{\kappa\}\} \cdot F_{w,z} \ ,$$

and **in that** the calculated vehicle longitudinal speed ($\hat{v}_x$) is determined as a function of the calculated wheel longitudinal forces ($\hat{F}_{w,x}$) at the vehicle wheels from the movement equation

$$\hat{\dot{v}}_x = \frac{1}{m} \sum \hat{F}_{w,x}$$

where
m is the mass of the vehicle.

**2.** Method according to Claim 1, **characterized in that** the wheel longitudinal slip (k) depends on the wheel speeds ($\omega_w$), the tyre radius ($r_w$) and the vehicle longitudinal speed ($v_x$) :

$$\kappa = \begin{cases} \dfrac{\omega_w r_w - v_x}{\omega_w r_w} & \text{for} \quad \omega_w r_w > v_x \quad \text{(Driving)} \\[2ex] \dfrac{\omega_w r_w - v_x}{v_x} & \text{for} \quad \omega_w r_w < v_x \quad \text{(Braking)} \end{cases}$$

3. Method according to Claim 1 or 2, **characterized in that** the longitudinal slip coefficient of friction ($\mu_w$) rises linearly with the wheel longitudinal slip (k) and remains at a constant value when a limiting value is reached.

4. Method according to one of Claims 1 to 3, **characterized in that** the wheel rotational movement is described as a function of the moment of inertia ($J_w$), of the wheel, the wheel driving torque (Mp), the wheel braking torque ($M_b$) and the wheel longitudinal force ($F_{w,x}$) by means of the differential equation

$$\dot{\omega}_w = \frac{1}{J_w}\left(M_p - M_b - F_{w,x}\, r_w\right)$$

5. Method according to one of Claims 1 to 4, **characterized in that** the coefficient of friction ($\mu_{road}$) of the underlying surface is described as a function of the wheel driving torque (Mp), the wheel braking torque ($M_b$) and the wheel contact force ($F_{w,z}$) by means of the differential equation

$$\dot{\mu}_{road} = \mu_{road}\, g\{M_p, M_b, F_{w,z}\}$$

6. Method according to one of Claims 1 to 5, **characterized in that** for the following equations:

$$\dot{\hat{x}} = f\{\hat{x}, u\}$$

$$\hat{y} = h\{\hat{x}\}$$

which describe the wheel dynamics
where

$$\hat{x} = [\hat{\omega}_w\ \hat{\mu}_{road}]^T$$

$$u = [M_p\ M_b\ F_{w,z}\ v_x]^T$$

$$\hat{y} = \hat{\omega}_w$$

an observer equation system of the form

$$\dot{\hat{x}} = f\{\hat{x}, u\} - k\{\hat{x}, u\}(\hat{y} - y)$$

$$\hat{y} = h\{\hat{x}\}$$

is set up, wherein the gain vector ($k\{\hat{x}, u\}$) contains two constants or state-variable-dependent gain factors ($k_1$, $k_2$).

7. Method according to Claim 6, **characterized in that** at least one gain factor ($k_1$, $k_2$) of the gain vectors ($k\{\hat{x}, u\}$)

$$\mathbf{k}\{\hat{\mathbf{x}}, \mathbf{u}\} = \begin{bmatrix} k_1 & k_2 \end{bmatrix}^T$$

is determined as a function of the relative wheel speed ($\hat{v}_{red}$) or a variable which correlates therewith according to

$$k_1 = k_1\{\hat{v}_{rel}\}$$

$$k_2 = k_2\{\hat{v}_{rel}\} \qquad ,$$

where the relative wheel speed ($\hat{v}_{rel}$) is determined as function of the calculated wheel speed ($\hat{\omega}_w$), the wheel radius ($r_w$) and the calculated vehicle longitudinal speed ($\hat{v}_x$) according to

$$\hat{v}_{rel} = \hat{\omega}_w r_w - \hat{v}_x$$

8. Method according to Claim 6 or 7, **characterized in that** the first gain factor ($k_1$) of the gain vector ($\mathbf{k}\{\hat{\mathbf{x}},\mathbf{u}\}$) is set to an at least approximately constant, positive value.

9. Method according to one of Claims 6 to 8, **characterized in that** the second gain factor ($k_2$) of the gain vector ($\mathbf{k}\{\hat{\mathbf{x}},\mathbf{u}\}$) is set, in the case of a braked wheel, to an at least approximately constant, positive value, and in the case of a driven wheel to an at least approximately constant, negative value, wherein at the transition from a positive value to a negative value the second gain factor ($k_2$) depends at least approximately linearly on the relative wheel speed ($\hat{v}_{rel}$) on the relative wheel speed ($\hat{v}_{rel}$).

10. Closed-loop or open-loop control device for carrying out the method according to one of Claims 1 to 9.

11. Driver assistance system in a vehicle having a closed-loop or open-loop control device according to Claim 10.

12. Electronic stability program (ESP) having a closed-loop or open-loop control device according to Claim 10 and a sensor system which comprises a yaw rate sensor, a lateral acceleration sensor and one wheel speed sensor per wheel.

**Revendications**

1. Procédé pour déterminer la vitesse longitudinale d'un véhicule dans un véhicule, dans lequel des vitesses de rotation de roues ($\omega_w$) déterminées au moyen de capteurs sont utilisées pour le calcul de la vitesse longitudinale ($v_x$) du véhicule, dans lequel, dans une équation d'estimation, une force longitudinale de roue ($F_{w,x}$) est déterminée en fonction de la vitesse de rotation de roue ($\omega_w$) et la vitesse longitudinale ($v_x$) du véhicule est établie en fonction de la force longitudinale de roue ($F_{w,x}$), **caractérisé en ce que** la force longitudinale de roue ($F_{w,x}$) est établie en fonction de la force d'appui de roue ($F_{w,z}$), du coefficient de frottement de chaussée ($\mu_{road}$) et d'un coefficient de frottement de patinage longitudinal ($\mu_w$) dépendant du patinage longitudinal de roue ($\kappa$) :

$$F_{w,x} = \max\{\mu_{road}, \mu_w\{\kappa\}\} \cdot F_{w,z},$$

et **en ce que** la vitesse longitudinale ($\hat{v}_x$) du véhicule est établie en fonction des forces longitudinales de roues calculées ($\hat{F}_{w,x}$) au niveau des roues du véhicule conformément à l'équation de mouvement suivante :

$$\hat{v}_x = \frac{1}{m} \sum \hat{F}_{w,x}$$

où

m est la masse du véhicule.

2. Procédé selon la revendication 1, **caractérisé en ce que** le patinage longitudinal de roue ($\kappa$) dépend des vitesses de rotation de roues ($\omega_w$), du rayon du pneu ($r_w$) et de la vitesse longitudinale ($v_x$) du véhicule :

$$\kappa = \begin{cases} \dfrac{\omega_w r_w - v_x}{\omega_w r_w} \text{ pour } \omega_w r_w > v_x \text{ (entraînement)} \\ \dfrac{\omega_w r_w - v_x}{v_x} \text{ pour } \omega_w r_w < v_x \text{ (freinage)} \end{cases}$$

3. Procédé selon l'une quelconque des revendications 1 ou 2, **caractérisé en ce que** le coefficient de frottement de patinage longitudinal ($\mu_w$) croît linéairement avec le patinage longitudinal de roue ($\kappa$) et reste constant lorsqu'une valeur limite est atteinte.

4. Procédé selon l'une quelconque des revendications 1 à 3, **caractérisé en ce que** le mouvement de rotation des roues est décrit en fonction du moment d'inertie de roue ($J_w$), du couple d'entraînement de roue ($M_p$), du couple de freinage de roue ($M_b$) et de la force longitudinale de roue ($F_{w,x}$) par l'intermédiaire de l'équation différentielle suivante :

$$\dot{\omega}_w = \frac{1}{J_w}\left(M_p - M_b - F_{w,x}r_w\right).$$

5. Procédé selon l'une quelconque des revendications 1 à 4, **caractérisé en ce que** le coefficient de frottement de chaussée ($\mu_{road}$) est décrit en fonction du couple d'entraînement de roue (Mp), du couple de freinage de roue ($M_b$) et de la force longitudinale de roue ($F_{w,z}$) par l'intermédiaire de l'équation différentielle suivante :

$$\dot{\mu}_{road} = \mu_{road}\, g\{M_p, M_b, F_{w,z}\}.$$

6. Procédé selon l'une quelconque des revendications 1 à 5, **caractérisé en ce que**, pour les équations décrivant la dynamique de roue :

$$\hat{\mathbf{x}} = \mathbf{f}\{\hat{\mathbf{x}}, \mathbf{u}\}$$

$$\hat{y} = h\{\hat{\mathbf{x}}\},$$

avec

$$\hat{\mathbf{x}} = [\hat{\omega}_w \hat{\mu}_{road}]^T$$

$$\mathbf{u} = \begin{bmatrix} M_p & M_b & F_{w,z} & v_x \end{bmatrix}^T$$

$$\hat{y} = \hat{\omega}_w,$$

un système d'équations d'observateur présentant la forme suivante :

$$\dot{\hat{\mathbf{x}}} = \mathbf{f}\{\hat{\mathbf{x}}, \mathbf{u}\} - \mathbf{k}\{\hat{\mathbf{x}}, \mathbf{u}\}(\hat{y} - y)$$

$$\hat{y} = h\{\hat{\mathbf{x}}\},$$

est établi, dans lequel le vecteur de gain ($\mathbf{k}\{\hat{\mathbf{x}}, \mathbf{u}\}$) contient deux facteurs de gain ($k_1$, $k_2$) constants ou dépendant de grandeurs d'état.

**7.** Procédé selon la revendication 6, **caractérisé en ce qu'**au moins un facteur de gain ($k_1$, $k_2$) du vecteur de gain ($\mathbf{k}\{\hat{\mathbf{x}}, \mathbf{u}\}$)

$$\mathbf{k}\{\hat{\mathbf{x}}, \mathbf{u}\} = [k_1 \quad k_2]^T$$

est déterminé en fonction de la vitesse de roue relative ($\hat{v}_{rel}$) ou d'une grandeur corrélée à celle-ci conformément à :

$$k_1 = k_1\{\hat{v}_{rel}\}$$

$$k_2 = k_2\{\hat{v}_{rel}\},$$

dans lequel la vitesse de roue relative ($\hat{v}_{rel}$) est déterminée en fonction de la vitesse de rotation de roue ($\hat{\omega}_w$), du rayon de roue ($r_w$) et de la vitesse longitudinale de véhicule calculée ($\hat{v}_x$) conformément à :

$$\hat{v}_{rel} = \hat{\omega}_w r_w - \hat{v}_x.$$

**8.** Procédé selon la revendication 6 ou 7, **caractérisé en ce que** le premier facteur de gain ($k_1$) du vecteur de gain ($\mathbf{k}\{\hat{\mathbf{x}}, \mathbf{u}\}$) est réglé à une valeur positive au moins approximativement constante.

**9.** Procédé selon l'une quelconque des revendications 6 à 8, **caractérisé en ce que** le second facteur de gain ($k_2$) du vecteur de gain ($\mathbf{k}\{\hat{\mathbf{x}}, \mathbf{u}\}$) est réglé, lors du freinage de la roue, à une valeur positive au moins approximativement constante, et **en ce qu'**il est réglé, lors de l'entraînement de la roue, à une valeur négative au moins approximativement constante, dans lequel, lors de la transition de la valeur positive à la valeur négative, le second facteur de gain ($k_2$) dépend au moins approximativement linéairement de la vitesse de roue relative ($\hat{v}_{rel}$).

**10.** Appareil de régulation ou de commande destiné à mettre en oeuvre le procédé selon l'une quelconque des revendications 1 à 9.

**11.** Système d'aide à la conduite dans un véhicule équipé d'un appareil de régulation ou de commande selon la revendication 10.

**12.** Programme de stabilité électronique (ESP) comportant un appareil de régulation ou de commande selon la revendication 10 et un système de capteurs qui comprend un capteur de vitesse d'embardée, un capteur d'accélération transversale et un capteur de vitesse de rotation de roue par roue.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10259272 A1
- DE 19936710 A1

- US 6015192 A